# EUROPÄISCHE PATENTSCHRIFT

(11) **EP 1 464 298 B1**
(45) Veröffentlichungstag und Bekanntmachung des Hinweises auf die Patenterteilung: **23.05.2007**
(21) Anmeldenummer: 04005756.4
(22) Anmeldetag: 11.03.2004
(51) Int. Cl.: A61C 13/00, A61C 8/00

(54) **Verfahren zur Herstellung von Implantataufbauten für Dentalimplantate sowie Implantataufbau für Dentalimplantat**
Method for the manufacturing of implant superstructures and superstructure for dental implant
Méthode de fabrication de prothèses destinées à être fixées sur des implants dentaires, ainsi que prothèse pour implant dentaire

(30) Priorität: 05.04.2003 DE 10315563
(43) Veröffentlichungstag der Anmeldung: 06.10.2004
(73) Patentinhaber: BEGO Medical GmbH, 28359 Bremen (DE)
(72) Erfinder: Uckelmann, Ingo, 28309 Bremen (DE); Laschütza, Helmut, Dr., 27721 Ritterhude (DE)
(74) Vertreter: Eisenführ, Speiser & Partner

(56) Entgegenhaltungen:
- EP-A- 0 904 743
- DE-A1- 10 052 389
- DE-A1- 10 231 136
- DE-A1- 19 901 643
- US-A- 5 052 929
- US-A- 5 674 069
- US-A- 5 716 215

## Beschreibung

Die Erfindung betrifft ein Verfahren zur Herstellung von Implantataufbauten für Dentalimplantate, wobei der Implantataufbau einen vorgefertigten Grundkörper zum Verbinden des Implantataufbaus mit dem Dentalimplantat und einen individuell angepassten Hauptkörper aufweist.

Die Erfindung betrifft ferner einen Implantataufbau für ein Dentalimplantat mit einem vorgefertigten Grundkörper zum Verbinden des Implantataufbaus mit dem Dentalimplantat und einem individuell angepassten Hauptkörper.

In der Dentaltechnik verwendet man zum Ersatz natürlicher Zähne Dentalimplantate, auf welchen Implantataufbauten befestigt werden. Ein Implantataufbau besteht üblicherweise aus einem Grundkörper zum Verbinden des Implantataufbaus mit dem Dentalimplantat sowie einem an den zu ersetzenden Zahn bzw. die verbliebenen Zähne bzw. die Gegebenheiten des Kiefers individuell angepassten Hauptkörper. Der Hauptkörper bildet jedoch nicht den sichtbaren Bereich des implantierten Zahns. Vielmehr wird der Hauptkörper selbst von einer Krone umgeben.

Derartige Implantataufbauten werden herkömmlicherweise gefertigt, indem auf einem handelsüblichen Grundkörper ein Wachsmodell modelliert wird, welches im wesentlichen dem späteren Hauptkörper entspricht. Von diesem Wachsmodell wird eine Form hergestellt. Anschließend wird das Wachs in einem Ofen ausgeschmolzen, so dass eine Negativform des Hauptkörpers entsteht. Diese Negativform wird dann mit geeignetem Material, wie Goldlegierungen oder edelmetallfreien Legierungen ausgeschmolzen. Während dieses Vorganges wird der vorgefertigte Grundkörper an den Hauptkörper angeschmolzen und somit mit diesen fest verbunden. Es entsteht ein Implantataufbau, der zudem regelmäßig manuell nachbearbeitet werden muss.

Dieser Prozess der Herstellung von Implantataufbauten ist langwierig und erfordert insbesondere viel Handarbeit. Er ist daher kostspielig

Aus US 5,052,929 ist ein Verfahren der vorgenannten Art bekannt, welches fortgebildet ist, indem bei Erstellung des Abdrucks des Mundraums ein bearbeitbares Zahnaufbauteil an ein vorverankertes lmplantatteil angesetzt wird und dieses bearbeitbares Zahnaufbauteil in die Gussform zur Herstellung eines Modells so eingesetzt wird, dass es im Modell verankert wird und dann eine Reorientierung durch Aufwachsen oder Bearbeiten erlaubt. Das solcherart reorientierte Zahnaufbauteil wird dann in einem späteren Bearbeitungsschritt aus einer Dentallegierung gegossen.

Aus EP 0 904 743 A2 ist ein Verfahren zur Herstellung von Zahnersatz bekannt, bei dem ein vorgefertigter Wurzelstift dazu dient, ein individuell angefertigtes Zahnersatzteil in einem gefrästen Wurzelkanal zu befestigen.

Aus DE 199 01 643 A1 ist es bekannt, Zahnersatz mittels des Laser-Sinter-Verfahrens herzustellen.

Der Erfindung liegt daher das Problem zugrunde, die Herstellung von Implantataufbauten zu vereinfachen.

Die Erfindung löst dieses Problem bei einem Verfahren der eingangs genannten Art dadurch, dass der Hauptkörper gebildet wird, indem auf den Grundkörper in Pulverform vorliegendes Material mittels Lasersintern und/oder Laserschmelzen schichtweise aufgesintert bzw. aufgeschmolzen wird.

Diese Herstellung von Dentalimplantataufbauten hat den Vorteil, dass ein vorgefertigter Grundkörper verwendet werden kann, der in großen Stückzahlen und daher mit einem qualitäts- und kostenoptimierten Herstellverfahren herstellbar ist. Daher ist ein derartig vorgefertigter Grundkörper von hoher Genauigkeit und zudem kostengünstig. Eine hohe Genauigkeit ist vorteilhaft, da der Grundkörper ein Anschlusselement zum Verbinden des Dentalimplantats mit dem Implantataufbau darstellt, das exakt und im wesentlichen spielfrei in einer definierten Position in das Implantat einpassbar sein sollte. Eine derartige hohe Genauigkeit lässt sich insbesondere in einem automatisierten Herstellungsprozess erzielen. Eine Automatisierung ist jedoch nur bei hohen Stückzahlen gleichartiger Bauteile effizient. Daher ist die Verwendung vorgefertigter, standardisierter Grundkörper besonders vorteilhaft.

Die Herstellung des Hauptkörpers durch Lasersintern bzw. Laserschmelzen ermöglicht eine weitestgehend automatisierte Herstellung des Implantataufbaus, da der Laser computergestützt vorgegebene Formen erzeugen kann. Die vorgegebenen Formen werden zunächst rechnergestützt ermittelt. Dazu werden bei der Abtastung eines Patientengebisses bzw. eines Abdrucks des Patientengebisses ermittelte Daten zugrundegelegt, um die optimale Form des Implantataufbaus zu ermitteln.

Das Lasersinterverfahren bzw. Laserschmelzverfahren ist darüber hinaus deshalb besonders vorteilhaft, da sich mit diesem Verfahren komplexe Strukturen nahezu beliebiger Form erzeugen lassen.

Darüber hinaus ist eine Nachbearbeitung von auf diese Weise gebildeten Implantataufbauten regelmäßig nicht notwendig.

Darüber hinaus hat das Lasersintem bzw. Laserschmelzen den Vorteil, dass das den Hauptkörper bildende Material ohne weiteres auf dem Grundkörper aufgebracht, nämlich aufgesintert oder aufgeschmolzen, werden kann, ohne dass ein nachträgliches Anschmelzen, Ankleben oder Einzementieren notwendig wäre. Der Grundkörper wird vielmehr unmittelbar mit dem entsprechenden Material schichtweise bedeckt. Die erste Schicht wird dabei unmittelbar auf dem Grundkörper aufgebracht. Die zweite und weitere Schichten werden dann jeweils auf die zuvor aufgebrachte Schicht aufgetragen.

Dieses Verfahren ist daher weitgehend automatisierbar. Manuelle Eingriffe sind kaum noch notwendig. Daher ermöglicht die Erfindung eine kostengünstige Herstellung von präzise hergestellten Implantataufbauten.

Ferner kann aufgrund der computerunterstützten Herstellung der Implantataufbauten auch die Herstellung der später anzubringenden Kronen vereinfacht werden, da die Präpärationsform des Implantataufbaus ebenfalls computergestützt ermittelt und realisiert wird. Es können nämlich die der Herstellung des Implantataufbaus zugrundeliegenden Daten auch für die Herstellung der Krone verwendet werden, wodurch sich der Herstellungsprozess des gesamten künstlichen Zahns bestehend aus Implantat, Implantataufbau und Krone weiter vereinfacht.

Bevorzugt wird als in Pulverform vorliegendes Material Titan oder ein titanhaltiges Pulver bzw. ein Pulver einer Titanlegierung verwendet. Dieses Material ist besonders geeignet, da es chemisch stabil ist und keine Wechselwirkungen mit dem menschlichen Organismus zeigt.

Besonders bevorzugt wird der Hauptkörper, das heißt das aufgesinterte bzw. aufgeschmolzene Material, anschließend mit Keramik beschichtet. Die Keramikbeschichtung erfolgt vorteilhafterweise mittels Elektrophorese oder ebenfalls mittels Lasersintern. Hierbei wird der Implantataufbau ebenfalls verblendet, wodurch die Ästhetik des Implantataufbaus optimiert werden kann. Einerseits wird nämlich verhindert, dass dunkle Materialien, wie bspw. Titan durch die auf dem Hauptkörper aufgesetzte Krone hindurchscheint, da der Hauptkörper selbst bereits nicht mehr dunkel, sondern Keramikfarben ist. Andererseits kann aber im Übergangsbereich von Implantat und Krone ebenfalls Keramikmaterial aufgebracht werden, so dass keine dunklen Ränder am Zahnfleischrand infolge von durch das Zahnfleisch hindurchscheinendem Titanmaterial auftreten.

Durch diese Keramikbeschichtung wird somit die Ästhetik des Implantataufbaus wesentlich verbessert.

Darüber hinaus hat die Keramikbeschichtung den weiteren Vorteil, dass die Oberflächeneigenschaften des Implantataufbaus auch im Bereich umgebenden Gewebes verbessert sind. Hierdurch wird eine Anlagerung des Zahnfleischs verbessert und die Gefahr einer Spaltbildung verringert, da sich das Zahnfleisch besser an einer Keramikoberfläche als an einer glatten Titanoberfläche halten kann.

Besonders bevorzugt wird jedoch der Grundkörper von der Keramikbeschichtung ausgespart. Dies ist deshalb vorteilhaft, da der Grundkörper im wesentlichen vollständig von dem Implantat aufgenommen wird. Somit bleiben die Kontaktflächen zwischen Implantat und Grundkörper des Implantataufbaus frei von einer Keramikschicht. Auf diese Weise vermeidet man, dass eine etwaige Keramikschicht in diesem Bereich die hohe Passgenauigkeit von Grundkörper und Implantat beeinträchtigt.

Weitere vorteilhafte Ausführungsformen ergeben sich aus den Unteransprüchen sowie aus den anhand der beigefügten Zeichnung näher erläuterten Ausführungsbeispiele. In der Zeichnung zeigt:
- Fig. 1: ein Dentalimplantat;
- Fig. 2: einen Grundkörper für einen erfindungsgemäßen Implantataufbau;
- Fig. 3: ein Ausführungsbeispiel eines erfindungsgemäßen lmplantataufbaus bestehend aus dem Grundkörper gemäß Fig. 2 sowie einem darauf aufgebrachten Hauptkörper;
- Fig. 4: eine Vorrichtung zur Durchführung eines erfindungsgemäßen Verfahrens; und
- Fig. 5: ein schematisches Flussdiagramm eines Ausführungsbeispiels des erfindungsgemäßen Verfahrens.

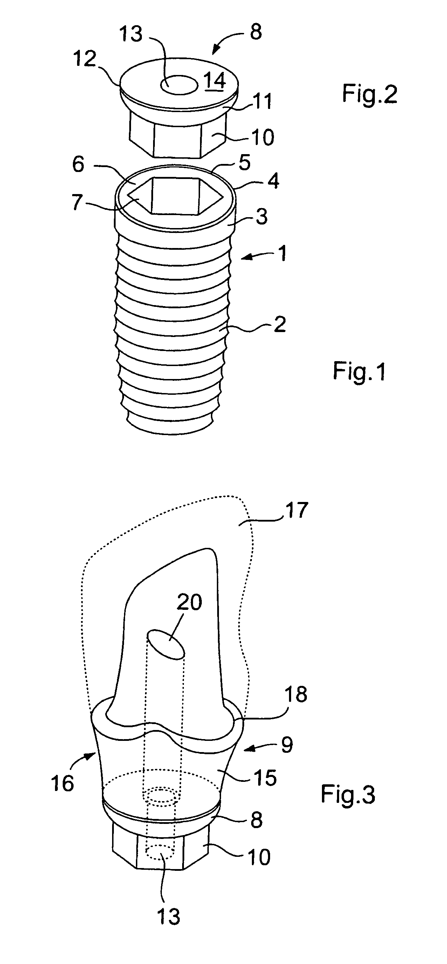

Fig. 1 zeigt ein Dentalimplantat 1 mit einem Außengewinde 2, das bspw. als selbstschneidendes Außengewinde ausgebildet sein kann. In einem oberen gewindefreien Abschnitt 3 weist das Dentalimplantat 1 eine im wesentlichen zylinderförmige Außenkontur auf. Dieser obere Abschnitt 3 geht am oberen Rand 4 in eine kreisringförmige plane Fläche 5 über. Diese kreisringförmige Fläche 5 geht zum Inneren des Implantat 1 in eine konische Fläche 6 über. Diese konische Fläche 6 ist trichterartig ausgebildet und endet in einer innensechskantartigen Vertiefung 7.

Am unteren Ende der Vertiefung 7 befindet sich eine (nicht dargestellte) konzentrisch zum Implantat 1 angeordnete Bohrung mit einem Innengewinde zur Aufnahme einer Befestigungsschraube zur Befestigung eines im nachfolgenden erörterten Implantataufbaus am Implantat 1.

Fig. 2 zeigt einen Grundkörper 8 eines im Fig. 3 dargestellten Implantataufbaus 9. Der Grundkörper 8 weist einen Außensechskant 10 auf, der im wesentlichen spielfrei in die innensechskantartige Vertiefung 7 einsteckbar ist. Auf diese Weise kann der Grundkörper 8 formschlüssig und verdrehsicher mit dem Implantat 1 verbunden werden. Der Grundkörper 8 dient somit als ein Anschlusselement des Implantataufbaus 9 am Implantat 1.

Bei einer alternativen Ausführungsform ist anstelle des Außensechskants 10 sowie der daran angepassten innensechskantartigen Vertiefung 7 eine andere geometrische Passform vorgesehen, bspw. ein Dreikant, Vierkant oder eine andere vielkantartige geometrische Struktur, die einen verdrehsicheren Anschluss des Implantataufbaus 9 am Implantat 1 gewährleistet.

Der Grundkörper 8 weist einen sich am Außensechskant anschließenden konischen Abschnitt 11 auf, wobei der Durchmesser des konischen Abschnitts 11 vom Außensechskant 10 weg zunimmt. Der maximale Durchmesser des konischen Abschnitts 11 wird im oberen Bereich des Grundkörpers 8 erreicht, wobei der konische Abschnitt 11 in diesem oberen Bereich in einen zylinderförmigen Abschnitt 12 übergeht. Dieser maximale Durchmesser des Grundkörpers 8 entspricht im wesentlichen dem Außendurchmesser des oberen Abschnitts 3 des Implantats 1. Dank der kreisringförmigen Fläche 5 am oberen Ende des Implantats 1 wird bei montiertem Implantataufbau 9 der konische Abschnitt 6 des Implantats 1 am Übergang zur kreisringförmigen Fläche 5 im wesentlichen vollständig abgeschlossen und abgedichtet.

Der Grundkörper 8 weist ferner eine axial verlaufende Bohrung 13 auf, die zu der Bohrung im Inneren des Implantats 1 koaxial ausgerichtet ist.

Die Bohrung 13 weist in ihrem oberen, dem Implantat 1 abgewandten Abschnitt einen größeren Durchmesser auf als in ihrem unteren, dem Implantat 1 zugewandten Abschnitt. Der größere Durchmesser dient zur Aufnahme eines Schraubenkopfes der Befestigungsschraube zum Befestigen des Grundkörpers 8 am Implantat 1. Der Übergang zwischen dem Bereich der Bohrung 13 mit größerem Durchmesser zum Bereich der Bohrung 13 mit kleinerem Durchmesser dient als Widerlager für die Schraube.

Implantat 1 und Grundkörper 8 sind vorzugsweise aus Titan oder einer Titanlegierung hergestellt. Grundkörper 8 und/oder Implantat 1 sind vorzugsweise CNC-gefräst, was eine hohe Genauigkeit dieser Teile gewährleistet. Sie können aber auch gegossen ausgebildet sein und ggf. nachbearbeitet sein.

Das obere Ende des Grundkörpers 8 wird von einer plane Oberfläche 14 begrenzt, auf die weiteres Material, bspw. pulverförmiges Titan oder einer pulverförmigen Titanlegierung aufgesintert bzw. aufgeschmolzen wird.

Fig. 3 zeigt den Implantataufbau 9 mit derartigem auf den Grundkörper 8 aufgebrachten Material, welches einen Hauptkörper 15 des Implantataufbaus 9 bildet. Dieser Hauptkörper 15 ist an die individuellen Gegebenheiten des künstlich herzustellenden Zahns angepasst. Ein unterer Abschnitt 16 des Hauptkörpers 15 bildet einen Transitionsbereich bzw. Übergangsbereich zwischen Implantat 1 und einer auf dem Implantataufbau 9 aufzusetzenden (mittels strichpunktierter Linie dargestellten) Krone 17. Am oberen Ende des Transitionsbereichs 16 befindet sich eine Präparationskante 18, auf welche die Krone 17 aufgesetzt wird. Oberhalb der Präparationskante 18 geht der Hauptkörper 15 in einen sog. Präparationsbereich über, das heißt in einen Bereich, auf den die Krone 17 befestigt wird.

Die Bohrung 13 des Grundkörpers 8 setzt sich als zylindrische Ausnehmung im Hauptkörper 15 fort und endet in einer oberen Öffnung 20, die zur Aufnahme der o.g. Befestigungsschraube dient.

Ein künstlicher Zahn wird wie folgt im Kiefer befestigt: Zunächst wird in den Kiefer ein Loch gebohrt. In dieses Loch wird das Implantat 1 eingeschraubt. Anschließend wird (nach einem vorangehenden Heilungsprozess) der Implantataufbau 9 mittels des als Verbindungselement dienenden Grundkörpers 8 mit dem Implantat 1 verbunden. Dabei wird durch die Öffnung 20 eine Befestigungsschraube in den Implantataufbau 9 eingeführt und mit dem Implantat 1 verschraubt. Anschließend wird die Krone 17 auf den Implantataufbau 9 aufgesetzt und einzementiert bzw. eingeklebt.

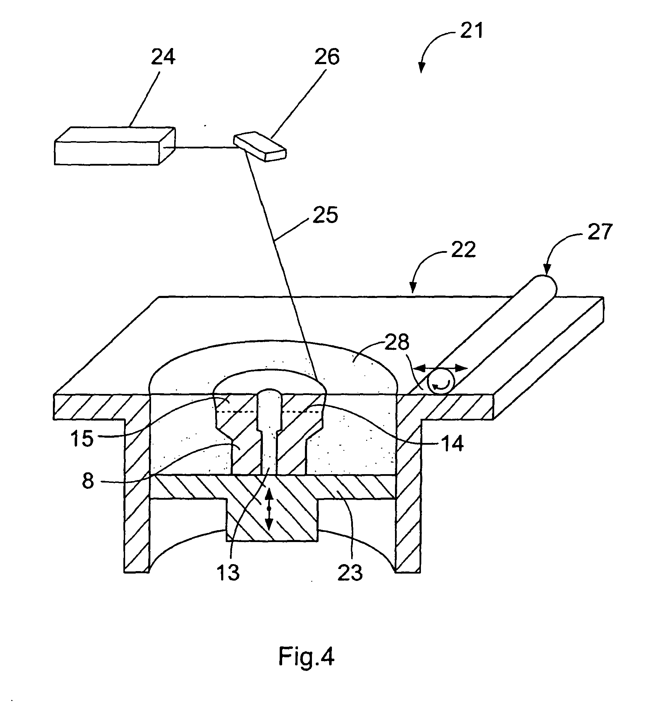

Fig. 4 zeigt eine Vorrichtung 21 zum Lasersintern oder Laserschmelzen. Die Vorrichtung 21 weist einen Tisch 22 mit einer höhenverstellbaren Plattform 23 auf, die über einen nicht dargestellten Antrieb in ihrer Höhe schrittweise, bspw. in Schritten von 0,05-0,2mm, verstellt werden kann.

Die Vorrichtung 21 weist ferner einen oberhalb des Tisches 22 angeordneten Laser 24, bspw. CO₂-Laser, auf, dessen Strahl 25 durch eine geeignete Vorrichtung, bspw. ein computergesteuertes Spiegelgalvanometer 26, geführt wird.

Die Vorrichtung 21 weist ferner einen Beschichtungsmechanismus 27 auf, mittels dessen pulverförmiges Material 28 gleichmäßig über die Oberfläche des Tisches 22 verteilt wird, so dass insbesondere der Raum zwischen der Oberfläche der Plattform 23 und der Oberfläche des Tisches 22 bis an die Oberfläche des Tisches 22 mit pulverförmigem Material 28 aufgefüllt wird.

Die Herstellung eines implantataufbaus geschieht nunmehr wie folgt: Zunächst befindet sich die Plattform 23 in einer oberen Ausgangsstellung. Der Grundkörper 8 wird auf der Plattform 23 positioniert und zwar derart, dass die im wesentlichen plane Oberfläche 14 des oberen Abschnitts in der Ebene der Oberfläche des Tisches 22 ausgerichtet ist. Der Bereich um den Grundkörper 8 zwischen der Plattform 23 und der Oberfläche des Tisches 22 wird dann ebenfalls mit pulverförmigem Material aufgefüllt.

Sodann wird eine Schicht pulverförmiges Material über die Oberfläche des Grundkörpers 8 mittels des Beschichtungsmechanismus 27 aufgetragen. Es befindet sich nunmehr eine dünne Schicht des pulverförmigen Materials, bspw. mit einer Dicke von 0,05-0,2 mm, oberhalb des Grundkörpers 8.

Anschließend wird der Laser 24 aktiviert und sein Laserstrahl 25 auf diese die Oberfläche 14 des Grundkörpers 8 bedeckende Schicht von pulverförmigem Material gerichtet. Der Laserstrahl 25 verfestigt oder schmilzt aufgrund der von ihm erzeugten Hitze das pulverförmige Material, das - je nach Menge der auf das pulverförmige Material aufgebrachten Energie - auf den Grundkörper 8 aufgesintert wird oder mit dem Grundkörper 8 vollständig verschmilzt. Der Laserstrahl 25 fährt entsprechend der vorprogrammierten Form des Implantataufbaus 9 die Oberfläche 14 des Grundkörpers 8, auf die eine Schicht aufzubringen ist, und ggf. hieran angrenzende oder nicht-angrenzende Bereiche ab. Die aufgebrachte Schicht entspricht nicht notwendigerweise vollständig der Form der Oberfläche des Grundkörpers 8. Insbesondere kann sie größer oder kleiner sein und bestimmte Bereich aussparen, wie bspw. den Bereich der Bohrung 13, oder neue Bereiche erschließen. Auf diese Weise wird auf den Grundkörper 8 eine erste Schicht des zunächst pulverförmigen Materials 28 aufgesintert bzw. aufgeschmolzen.

Sodann wird der Laser deaktiviert und die Plattform 23 um eine Schichtdicke, bspw. von 0,05-0,2 mm, abgesenkt. Mittels des Beschichtungsmechanismus 27 wird anschließend eine neue Schicht pulverförmigen Materials 28 aufgetragen und glattgestrichen. Anschließend wird erneut der Laser 24 aktiviert und der Laserstrahl 25 tastet erneut computergesteuert den Bereich ab, innerhalb dessen das pulverförmige Material 28 mit der zuvor aufgebrachten Schicht verschmolzen oder aufgesintert werden soll, oder auch angrenzende oder nicht-angrenzende Bereiche. Dieser Prozess des Auftrages von Schichten von pulverförmigem Material und der Aufsinterung bzw. Verschmelzung dieser Schichten mit dem Grundkörper 8 bzw. zuvor aufgebrachten Schichten mittels des Lasers 24 wird wiederholt durchgeführt, bis sich auf dem Grundkörper 8 der Hauptkörper 15 in der gewünschten Form des Implantataufbaus 9 ausgebildet hat.

Mittels dieses Verfahrens lassen sich beliebige Formen von Implantataufbauten ausbilden, die an beliebiger Stelle Ausnehmungen, falls gewünscht, aufweisen können. Insbesondere lässt sich ohne weiteres die Bohrung 13 im Grundkörper als Ausnehmung im Hauptkörper 15 fortsetzen, auch mit unterschiedlichen Querschnittsformen, soweit dies gewünscht ist.

Dieses Verfahren eignet sich insbesondere deswegen, da komplexe Geometrien von Implantataufbauten ohne weiteres hergestellt werden können. Grundsätzlich kann mit dem Laserstrahl 25 beliebiges Material aufgesintert werden. Besonders geeignet ist jedoch Titanpulver bzw. titanhaltiges Pulver oder Pulver einer Titanlegierung.

Der auf diese Weise hergestellte Implantataufbau 9 wird anschließend keramisch beschichtet und zwar vorzugsweise nur im Bereich des Hauptkörpers 15, d.h. der Grundkörper 8 wird von einer derartigen keramischen Beschichtung ausgespart. Die keramische Beschichtung erfolgt vorzugsweise mittels Elektrophorese. Alternativ oder zusätzlich kann die keramische Beschichtung jedoch ebenfalls mittels Lasersintern aufgetragen werden. Hierzu kann eine der in Fig. 4 gezeigten Vorrichtung entsprechende Vorrichtung eingesetzt werden. Als pulverförmiges Material wäre dann keramisches Material zu benutzen. Die Führung des Laserstrahls 25 erfolgt dann jedoch derart, dass der Laserstrahl 25 die äußeren Oberfläche des Implantataufbaus 9, zumindest aber des Hauptkörpers 15 abtasten kann. Hierzu kann es ggf. erforderlich sein, das Spiegelgalvanometer 26 im Raum, insbesondere aber in einer Ebene parallel zur Ebene der Oberfläche des Tisches 22, zu verfahren. Zusätzlich oder alternativ kann die Vorrichtung zum Lasersintern jedoch auch derart ausgebildet sein, dass der Tisch 22 drehbar ausgestaltet ist.

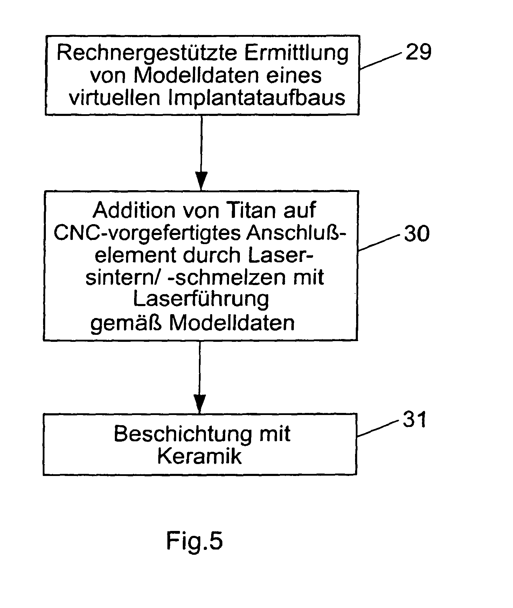

Fig. 5 veranschaulicht grundlegende Schritte des Verfahrens zur Herstellung von Implantataufbauten gemäß einem bevorzugten Ausführungsbeispiel der Erfindung. Zunächst wird in einem ersten Schritt 29 rechnergestützt ein Modell eines virtuellen Implantataufbaus generiert. Die auf diese Weise erhaltenen Modelldaten werden anschließend bei der Führung des Laserstrahls 25, insbesondere zur Steuerung des Spiegelgalvanometers 26, verwendet.

In einem dem ersten Schritt 29 folgenden zweiten Schritt 39 wird unter Zuhilfenahme dieser Modelldaten Titan auf ein CNC-vorgefertigtes Anschlusselement (Grundkörper 8) durch Lasersintern bzw. Laserschmelzen aufgebracht.

In einem weiteren Schritt 31 wird der auf diese Weise hergestellte Implantataufbau mit keramischem Material beschichtet.

Dank der Erfindung können individuell angepasste zahnfarbene Implantataufbauten mit optimierter Präparations- und Transitionsform hergestellt werden. Sie ermöglichen eine vereinfachte Prothetik, eine hervorragende Ästhetik sowie optimierte Oberflächeneigenschaften des Implantataufbaus für den Kontakt mit umliegendem Gewebe.

## Patentansprüche

1. Verfahren zur Herstellung von Implantataufbauten (9) für Dentalimplantate (1), wobei der Implantataufbau (9) einen vorgefertigten Grundkörper (8) zum Verbinden des Implantataufbaus (9) mit dem Dentalimplantat (1) und einen individuell angepassten Hauptkörper (15) aufweist,
**dadurch gekennzeichnet, dass**
der Hauptkörper (15) gebildet wird, indem auf den Grundkörper (8) in Pulverform vorliegendes Material (28) mittels Lasersintern und/oder Laserschmelzen (30) schichtweise aufgesintert bzw. aufgeschmolzen wird und der Laserstrahl (25) von einer Steuerungseinheit anhand von vorab rechnerisch ermittelten Modelldaten eines virtuellen Implantataufbaus geführt wird.

2. Verfahren nach Anspruch 1,
**dadurch gekennzeichnet, dass**
ein Laserstrahl (25) punktweise die Fläche einer zu sinternden bzw. zu schmelzenden Schicht abfährt.

3. Verfahren nach einem der vorhergehenden Ansprüche,
**dadurch gekennzeichnet, dass**
der Grundkörper (8) ein vom individuellen Implantataufbau (9) unabhängiges Anschlusselement ist.

4. Verfahren nach einem der vorhergehenden Ansprüche,
**dadurch gekennzeichnet, dass**
der Grundkörper (8) CNC-gefräst vorgefertigt wird.

5. Verfahren nach einem der vorhergehenden Ansprüche,
**dadurch gekennzeichnet, dass**
der Grundkörper (8) gegossen wird.

6. Verfahren nach einem der vorhergehenden Ansprüche,
**dadurch gekennzeichnet, dass**
das in Pulverform vorliegende Material (28) titan- bzw. titanhaltiges Pulver ist.

7. Verfahren nach einem der vorhergehenden Ansprüche,
**dadurch gekennzeichnet, dass**
das aufgesinterte bzw. aufgeschmolzene Material mit Keramik beschichtet wird (31).

8. Verfahren nach Anspruch 7,
**dadurch gekennzeichnet, dass**
das Keramikbeschichten (31) mittels Elektrophorese durchgeführt wird.

9. Verfahren nach Anspruch 7,
**dadurch gekennzeichnet, dass**
das Keramikbeschichten (31) mittels Lasersintern durchgeführt wird.

10. Verfahren nach einem der Ansprüche 7 bis 9,
**dadurch gekennzeichnet, dass**
der Grundkörper (8) von der Keramikbeschichtung ausgespart wird.

## Claims

1. Method for manufacturing implant abutments (9) for dental implants (1), wherein the implant abutment (9) comprises a prefabricated base member (8) for joining the implant abutment (9) to the dental implant (1), and a customised main body (15), **characterised in that** the main body (15) is formed by sintering and/or melting material in powder form (28) onto the base member (8) using laser sintering and/or laser melting (30) and the laser beam (25) is guided by a control unit on the basis of previously computed model data of a virtual implant abutment.

2. Method according to claim 1, **characterised in that** a laser beam (25) travels point by point along the surface of a layer to be sintered and/or melted.

3. Method according to any one of the preceding claims, **characterised in that** the base member (8) is a connector element that is independent of the specific implant abutment (9).

4. Method according to any one of the preceding claims, **characterised in that** the base member (8) is pre-fabricated by CNC milling.

5. Method according to any one of the preceding claims, **characterised in that** the base member (8) is cast.

6. Method according to any one of the preceding claims, **characterised in that** the material in powder form (28) is titanium powder or a powder containing titanium.

7. Method according to any one of the preceding claims, **characterised in that** the sintered and/or melted material is coated with ceramics (31).

8. Method according to claim 7, **characterised in that** the ceramic coating (31) is carried out by electrophoresis.

9. Method according to claim 7, **characterised in that** the ceramic coating (31) is carried out using laser sintering.

10. Method according to any one of claims 7 to 9, **characterised in that** the ceramic coating is not applied to the base member (8).

## Revendications

1. Méthode de fabrication de prothèses (9) pour implants dentaires (1), sachant que la prothèse (9) comporte un corps de base (8) préfabriqué servant à fixer la prothèse (9) à l'implant dentaire (1) et un corps principal (15) adapté de manière individuelle,
**caractérisée en ce que**
le corps principal (15) est formé en ceci que du matériau (28) présent sous forme de poudre sur le corps de base (8) est fritté ou fondu par couches au moyen du frittage laser et/ou de la fusion laser (30) et le rayon laser (25) est guidé par une unité de commande à l'aide de données de modèle, préalablement déterminées par calcul, d'une prothèse virtuelle.

2. Méthode selon la revendication 1,
**caractérisée en ce qu'**
un rayon laser (25) balaye point par point la surface d'une couche à fritter ou à faire fondre.

3. Méthode selon l'une quelconque des revendications précédentes,
**caractérisée en ce que**
le corps de base (8) est un élément de raccordement indépendant de la prothèse individuelle (9).

4. Méthode selon l'une quelconque des revendications précédentes,
**caractérisée en ce que**
le corps de base (8) est préfabriqué par fraisage CNC.

5. Méthode selon l'une quelconque des revendications précédentes,
**caractérisée en ce que**
le corps de base (8) est coulé.

6. Méthode selon l'une quelconque des revendications précédentes,
**caractérisée en ce que**
le matériau (28) présent sous forme de poudre est une poudre de titane ou contenant du titane.

7. Méthode selon l'une quelconque des revendications précédentes,
**caractérisée en ce que**
le matériau fritté ou fondu est recouvert de céramique (31).

8. Méthode selon la revendication 7, **caractérisée en ce que** la couverture en céramique (31) est réalisée par électrophorèse.

9. Méthode selon la revendication 7,
**caractérisée en ce que**
la couverture en céramique (31) est réalisée par frittage au laser.

10. Méthode selon l'une quelconque des revendications 7 à 9,
**caractérisée en ce que**
le corps de base (8) est évidé dans le revêtement en céramique.
